# EUROPEAN PATENT APPLICATION

(11) **EP 4 475 580 A1**
(43) Date of publication of application: **11.12.2024**
(21) Application number: 24179128.4
(22) Date of filing: 30.05.2024
(51) Int. Cl.: H04W 12/069, H04W 12/42, H04W 48/18, H04W 88/06, H04W 84/00, H04W 4/44, H04W 4/70

(54) **COMMUNICATION SYSTEM AND AUTHENTICATION METHOD**

(30) Priority: 07.06.2023 JP 2023094249
(71) Applicant: TOYOTA JIDOSHA KABUSHIKI KAISHA, Aichi-ken 471-8571 (JP)
(72) Inventor: TAKEOKA, Koji, Toyota-shi, 471-8571 (JP)
(74) Representative: D Young & Co LLP

(57) **Abstract**

A communication system comprises a mobile communication terminal **(10)** and a first network **(2)**, wherein the mobile communication terminal **(10)** comprises: a first storage **(103A)** configured to store first authentication information; and a first controller **(101)** configured to execute: selecting a communication network to be used for communication with the first network **(2)** from among a plurality of communication networks including an untrusted network that is not trusted; and receiving authentication from the first network connected via the selected communication network, using the first authentication information; and the first network **(2)** comprises: a second storage **(HSS)** configured to store second authentication information corresponding to the first authentication information; a gateway **(ePDG)** configured to accommodate access from the untrusted network; and a second controller **(201)** configured to authenticate the mobile communication terminal **(10)** connected via the gateway, based on the second authentication information.

## Description

### CROSS REFERENCE TO THE RELATED APPLICATION

This application claims the benefit of Japanese Patent Application No. 2023-094249, filed on June 7, 2023, which is hereby incorporated by reference herein in its entirety.

### BACKGROUND

The present disclosure relates to a communication technique.

### Description of the Related Art

Techniques for increasing robustness of communication using a cellular communication network have been developed.

With regard thereto, for example, Japanese Patent Laid-Open No. 2022-180105 discloses a communication apparatus equipped with a SIM card capable of storing a plurality of communication profiles.

### SUMMARY

An object of the present disclosure is to improve availability of communication.

The present disclosure in its one aspect provides a communication system comprising a mobile communication terminal and a first network, wherein the mobile communication terminal comprises: a first storage configured to store first authentication information; and a first controller configured to execute: selecting a communication network to be used for communication with the first network from among a plurality of communication networks including an untrusted network that is not trusted; and receiving authentication from the first network connected via the selected communication network, using the first authentication information; and the first network comprises: a second storage configured to store second authentication information corresponding to the first authentication information; a gateway configured to accommodate access from the untrusted network; and a second controller configured to authenticate the mobile communication terminal connected via the gateway, based on the second authentication information.

The present disclosure in its another aspect provides an authentication method, wherein a mobile communication terminal executes: a first step of selecting a communication network to be used for communication with a first network from among a plurality of communication networks including an untrusted network that is not trusted; and a second step of receiving authentication from the first network connected via the selected communication network, using first authentication information stored in advance; and a controller included in the first network executes a third step of authenticating the mobile communication terminal connected via a gateway configured to accommodate access from the untrusted first communication network, using second authentication information corresponding to the first authentication information stored in advance.

Further, as another aspect, a program for causing a computer to execute the above method or a computer-readable storage medium that non-transitorily stores the program is given.

According to the present disclosure, it is possible to improve availability of communication.

### BRIEF DESCRIPTION OF THE DRAWINGS

Fig. 1 is an overview diagram of a vehicle communication network according to a first embodiment;
Fig. 2 is a diagram illustrating a network configuration illustrated in Fig. 1 in more detail;
Fig. 3 is a hardware configuration diagram of a DCM 10;
Fig. 4 is a hardware configuration diagram of a communication apparatus 11;
Fig. 5 is a hardware configuration diagram of an authentication apparatus 20;
Fig. 6 is a software configuration diagram of the DCM 10;
Fig. 7 is a software configuration diagram of the communication apparatus 11;
Fig. 8 is a software configuration diagram of the authentication apparatus 20;
Fig. 9 is a flowchart of a process for the DCM 10 to connect to a communication system 2;
Fig. 10 is a flowchart of an authentication process executed by the authentication apparatus 20; and
Fig. 11 is an overview diagram of a vehicle communication network according to a modification of the first embodiment.

### DESCRIPTION OF THE EMBODIMENTS

Recently, connectedness of automobiles has progressed, and the number of vehicles mounted with a communication apparatus has been increasing. The in-vehicle communication apparatus can provide various kinds of services for a driver of a vehicle, for example, by communicating with a server apparatus (such as an application server) via a cellular communication network.

A general in-vehicle communication apparatus includes a communication module according to a particular standard and a SIM card for connecting to a particular carrier network, and it is not easy to change the communication standard and the connection-destination carrier network.

If there is only one carrier network that is available to a wireless communication apparatus, however, communication is disconnected if a communication failure occurs in the carrier network. Furthermore, since automobiles are generally used over a long span such as ten years or more, it is also assumed that a communication standard assumed at the time of manufacture becomes unavailable in the future because of generation change in the communication standard. In order to cope therewith, it is necessary to change a SIM card and a communication module, which requires a large amount of cost.

A communication system according to the present disclosure solves such a problem.

A communication system according to a first aspect of the present disclosure is a communication system comprising a mobile communication terminal and a first network, wherein
the mobile communication terminal comprises:
a first storage configured to store first authentication information; and
a first controller configured to execute:
   selecting a communication network to be used for communication with the first network from among a plurality of communication networks including an untrusted network that is not trusted; and
   receiving authentication from the first network connected via the selected communication network, using the first authentication information; and
   the first network comprises:
      a second storage configured to store second authentication information corresponding to the first authentication information;
      a gateway configured to accommodate access from the untrusted network; and
      a second controller configured to authenticate the mobile communication terminal connected via the gateway, based on the second authentication information.

The mobile communication terminal is typically an in-vehicle terminal but is not limited thereto. The mobile communication terminal is configured to be capable of selecting a communication network to be used for communication with the first network from among a plurality of communication networks including an untrusted network.

The first network includes a gateway that is a terminal apparatus that accommodates access from the untrusted network. Thereby, the mobile communication terminal can establish connection to the first network via the selected communication network.

The mobile communication terminal can be configured to receive authentication from the first network using the same authentication information no matter which of the plurality of communication networks the mobile communication terminal selects. Similarly, the controller of the first network can be configured to perform authentication based on the same authentication information no matter which communication network the mobile communication terminal selects.

When a plurality of communication routes are provided between the mobile communication terminal and the first network, it is necessary to have different authentication information for each communication route (for example, for each carrier) in conventional methods.

In the communication system according to the present disclosure, however, information used for authentication is fixed irrespective of a communication route. Thereby, it becomes possible to, even when any communication route is added, continue communication between the mobile communication terminal and the first network without changing data for authentication.

The mobile communication terminal may be configured such that a communication module configured to perform communication via any of communication networks including an untrusted network can be added. For example, it is also possible to add any communication network by USB tethering or the like.

The first authentication information that the mobile communication terminal includes may be a SIM card or SIM profile information that eSIM includes. The SIM profile information may be issued by a business operator that operates the first network.

Specific embodiments of the present disclosure will be described below based on drawings. A hardware configuration, a module configuration, a functional configuration, and the like described in each embodiment are not intended to limit the technical scope of the disclosure only thereto unless otherwise described.

### (First embodiment)

### [Overview of network]

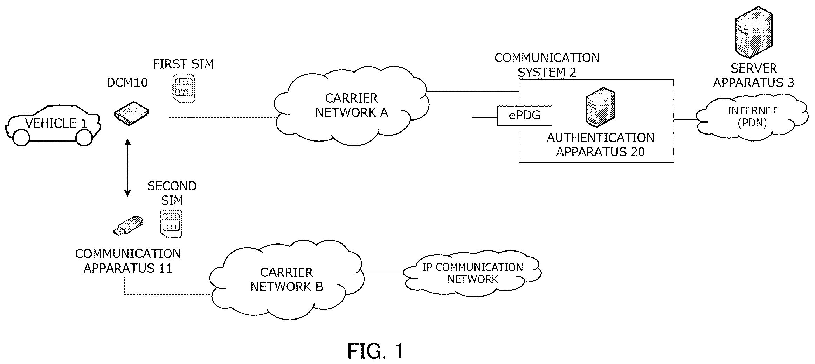

An overview of a vehicle communication network according to a first embodiment will be described with reference to Fig. 1. The vehicle communication network according to the present embodiment includes a DCM 10 mounted on a vehicle 1, a communication apparatus 11 connected to the DCM 10, and a server apparatus 3. The DCM 10 and the server apparatus 3 are connected via a carrier network A and a communication system 2 or via a carrier network B and the communication system 2. The communication system 2 is a network that includes a plurality of communication apparatuses including an authentication apparatus 20. A plurality of vehicles 1 and server apparatuses 3 may be included in the system.

The vehicle 1 is a connected vehicle capable of communication with any server apparatus via wireless communication. The vehicle 1 can provide various kinds of services by communicating with an external server apparatus (for example, the server apparatus 3) via the DCM 10 which is a wireless communication apparatus. As the various kinds of services, for example, a navigation service, a remote control (for example, remote air conditioning) service, an in-car Wi-Fi (registered trademark) service, and an emergency call service can be exemplified. The vehicle 1 may have an in-vehicle terminal for providing the services in addition to the apparatuses illustrated in Fig. 1.

The DCM 10 is an apparatus for performing wireless communication with a predetermined network in order to connect a component of the vehicle 1 (for example, the in-vehicle terminal) and the server apparatus 3. In the present embodiment, the DCM 10 is configured to be connectable to a cellular communication network determined in advance. The DCM 10 includes an eUICC (embedded universal integrated circuit card) for identifying a user. The eUICC may be a physical SIM card or may be eSIM. Hereinafter, the eUICC that the DCM 10 includes will be referred to as a first SIM.

In the example illustrated in Fig. 1, the DCM 10 is configured to be communicable with the carrier network A constituting a cellular communication network. The carrier network A includes a cellular communication network base station, a control apparatus that manages mobile communication terminals, and the like.

In the present embodiment, the carrier network A is connected to the communication system 2. The communication system 2 is a network that connects the carrier network A and a PDN (packet data network) such as the Internet.

It can be assumed that the carrier network A is a network operated by a carrier, and the communication system 2 is a system operated by the manufacturer of the vehicle 1. By mutually communicating them, it becomes possible to provide, for example, a service unique for the vehicle 1 by the communication system 2.

In the present embodiment, the carrier network A provides only a communication line, and the communication system 2 provides authentication of the DCM 10 and provides services for the DCM 10. The DCM 10 includes the first SIM that stores profile information for receiving authentication by the communication system 2. The first SIM was issued by a business operator that operates the communication system 2 (for example, a vehicle manufacturer). The communication system 2 includes the authentication apparatus 20 for authenticating the DCM 10.

The DCM 10 connects to the communication system 2 via the carrier network A and receives authentication from the communication system 2 using the profile information stored in the first SIM. In the present embodiment, the authentication apparatus 20 of the communication system 2 performs authentication of the DCM 10 based on the profile information included in the first SIM. It becomes possible for the DCM 10, which has been authenticated, to communicate with a PDN (for example, the Internet) and start communication with the server apparatus 3.

In the form in which the DCM 10 directly connects to a cellular communication network (the carrier network A) as illustrated in Fig. 1, communication is disconnected if a communication failure occurs in the carrier network.

In order to cope with this, a technique is also proposed in which a plurality of pieces of profile information are stored in a SIM to switch a network according to a situation (for example, connect to another carrier network).

Even in the case of adopting such a configuration, however, it is not possible to respond to generational changes in cellular communication standards. For example, as for conventional communication standards such as 3G, it is expected that services will be sequentially stopped. Meanwhile, since automobiles are generally used over a long span such as ten years or more, it is assumed that communication apparatuses such as DCMs equipped at the time of manufacture cannot be used in the future. In order to change a carrier network, it is necessary to change a SIM card and a communication module, which requires a large amount of cost.

In order to cope with this, the DCM 10 is configured so that another communication apparatus can be externally connected thereto in the present embodiment. Thereby, when it becomes impossible to use the carrier network A, an alternative communication route is secured via the communication apparatus.

As illustrated in Fig. 1, the DCM 10 is configured such that the communication apparatus 11 can be externally connected thereto. For example, the communication apparatus 11 can be connected to the DCM 10 with an interface, such as a USB interface, and the DCM 10 is configured to be capable of transmitting/receiving data via the communication apparatus 11. In other words, the DCM 10 is configured to enable USB tethering.

The communication apparatus 11 is an apparatus capable of performing wireless communication according to any communication standard. For example, even when services according to the communication standard adopted by the DCM 10 end, the DCM 10 can continue communication via the communication apparatus 11.

The communication apparatus 11 is an apparatus having a communication function similar to that of the DCM 10. The communication apparatus 11 includes a second SIM and can connect to the carrier network B based on profile information stored in the second SIM.

The carrier network B is a cellular communication network independent of the carrier network A and the communication system 2. For example, the user of the vehicle 1 selects the carrier network B, makes a contract, and prepares the communication apparatus 11 corresponding to the contract.

Since the carrier network B is a network independent of the communication system 2, it is not possible to immediately connect the carrier network B and the communication system 2 with each other. Therefore, in the present embodiment, it is possible to, by the DCM 10, which has connected to the carrier network B, establishing an IPsec tunnel with an ePDG (the enhanced Packet Data Gateway) of the communication system 2, connect to the communication system 2 via the carrier network B and an IP communication network beyond the carrier network B.

The communication system 2 includes a gateway (ePDG) for accommodating access from the IP communication network. The ePDG is a gateway for accommodating untrusted non-3GPP wireless access. Thereby, the communication system 2 can accept access via the IP communication network (via the carrier network B) in addition to access via a wireless access network (the carrier network A). The IP communication network is typically the Internet but may be a network other than the Internet.

Thereby, it becomes possible for the DCM 10, which has connected to the carrier network B, to communicate with the communication system 2 through a route via the IP communication network (the Internet).

According to such a configuration, it becomes possible for the user of the vehicle 1 to, even when the carrier network A is not available, continue communication between the DCM 10 and the communication system 2 through any route.

### [Summary of authentication process]

When the DCM 10 connects to the communication system 2 via the carrier network A, the communication system 2 can confirm the authenticity of the DCM 10 by a SIM issued by the communication system 2 itself (the first SIM). On the other hand, when the DCM 10 is connected via the carrier network B, the communication system 2 cannot immediately trust the DCM 10 because only authentication by the carrier network B (authentication using the second SIM) has been performed.

Therefore, in the present embodiment, the communication system 2 (the authentication apparatus 20) authenticates the DCM 10 connected via the ePDG, using authentication information that the first SIM includes, similarly to the case of connection via the carrier network A.

Thereby, even when the communication route between the DCM 10 and the communication system 2 changes, the communication system 2 can continue robust authentication equal to that of cellular communication without changing the apparatus configuration.

Furthermore, in the present embodiment, the authentication apparatus 20 shares a result of authenticating the DCM 10 as described above, with the server apparatus 3. Further, the authentication apparatus 20 has a function of authenticating the server apparatus 3 and shares a result of authenticating the server apparatus 3 with the DCM 10. The authentication result may be transmitted or shared using a predetermined API (application programming interface).

In the present embodiment, since the authentication apparatus 20 shares results of authenticating the DCM 10 and the server apparatus 3, with the server apparatus 3 and the DCM 10, respectively, it is possible for the DCM 10 and the server apparatus 3 to confirm that their communication counterparts are authenticated, without locally executing an authentication process. Further, thereby, it becomes unnecessary to exchange certificates between the DCM 10 and the server apparatus 3, and, therefore, a processing load on the DCM 10 can be reduced.

Furthermore, the authentication apparatus 20 can confirm that the user of the vehicle 1 is a contractor himself by authenticating the DCM 10. That is, by the authentication apparatus 20 and the server apparatus 3 sharing an authentication result, it becomes possible for the server apparatus 3 to confirm that the user of the vehicle 1 is the contractor himself. Thereby, an advantage occurs that, at the time of starting use of a service, it becomes unnecessary to perform an identity verification process (for example, acquisition of an identification card, or the like).

### [Details of network configuration]

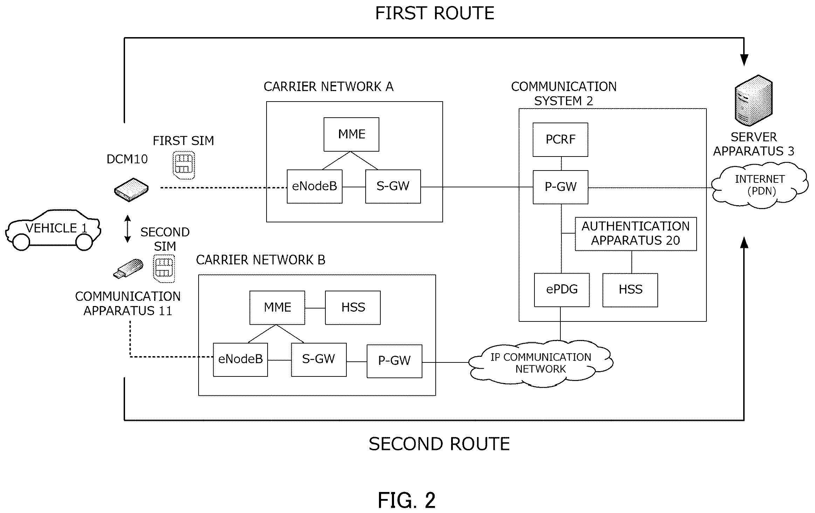

Fig. 2 is a diagram illustrating components of each of the system described with reference to Fig. 1 in detail. In Fig. 2, components according to the first embodiment are extracted from among components of each system, and the components of each system are not limited to those illustrated in Fig. 2.

The carrier network A includes the cellular communication base station (hereinafter, the eNodeB), a control apparatus (a mobile management entity, hereinafter, an MME) that manages mobile communication terminals including the DCM 10, and a gateway (a serving gateway, hereinafter, an S-GW) that relays data.

The communication system 2 includes a gateway (a packet gateway, hereinafter, a P-GW) for connecting an EPC network to the Internet and an apparatus (hereinafter, a PCRF) that performs network policy and accounting management.

Further, as described before, the communication system 2 includes the gateway (the ePDG) that accommodates access from the IP communication network and the authentication apparatus 20.

The authentication apparatus 20 is also called an AAA (authentication authorization and accounting) server, and executes a process for authenticating mobile communication terminals including the DCM 10. The authentication apparatus 20 has a function of performing authentication instead of an MME of an ordinary EPC network. The authentication apparatus 20 is connected to a database (a home subscriber server, hereinafter, an HSS) that manages subscriber information, and performs authentication of a mobile communication terminal based on information (authentication information corresponding to each first SIM) stored in the database.

The carrier network B has a function of authenticating the mobile communication terminal (the communication apparatus 11) via a base station (an eNodeB). The carrier network B includes a P-GW connected to the IP communication network (for example, the Internet). Thereby, the mobile communication terminal (the communication apparatus 11) connected to the carrier network B can perform communication with the IP communication network.

In the case of establishing connection using its own wireless communication module, the DCM 10 transmits a connection request to the communication system 2 via the carrier network A. At this time, the DCM 10 receives authentication from the authentication apparatus 20, using the authentication information included in the profile information (hereinafter referred to as a first profile) stored in the first SIM.

Further, in the case of establishing connection via the communication apparatus 11, the DCM 10 transmits a connection request to the communication system 2 with the ePDG of the communication system 2 as a destination. Since the ePDG is a gateway that accommodates access from the IP communication network as described before, the DCM 10 can communicate with the communication system 2 via the ePDG. At this time, the DCM 10 receives authentication from the authentication apparatus 20, using the authentication information included in the profile information (the first profile) stored in the first SIM.

That is, the DCM 10 is configured to receive authentication from the authentication apparatus 20 with the same authentication information (the authentication information included in the first profile) irrespective of a route to the communication system 2.

The connection request is processed by the authentication apparatus 20 of the communication system 2, and authentication is executed between the DCM 10 and the authentication apparatus 20. The authentication apparatus 20 performs authentication of the DCM 10 based on the authentication information included in the first profile. When the authentication is completed, a route from the DCM 10 to the PDN is established, and it becomes possible for the DCM 10 and the server apparatus 3 to perform communication.

In the present embodiment, the DCM 10 receives authentication from the authentication apparatus 20 with the same authentication information (profile information) in the case of a route for directly connecting to the communication system 2 via the cellular communication network (a first route illustrated in Fig. 2) and in the case of a route for connecting to the communication system 2 via the IP communication network using tethering (a second route). According to such a configuration, it becomes possible to additionally provide a route via the IP communication network (the second route) by utilizing equipment for performing authentication on the cellular communication network, such as the first SIM and the authentication apparatus 20.

Furthermore, the authentication apparatus 20 shares a result of authenticating the DCM 10 with the server apparatus 3. Further, the authentication apparatus 20 authenticates the server apparatus 3, which is a communication counterpart of the DCM 10, in advance and shares a result of the authentication with the DCM 10. If there are a plurality of server apparatuses 3, the plurality of server apparatuses 3 may be authenticated in advance. Thereby, the DCM 10 and the server apparatus(es) 3 can mutually confirm authenticity of their counterparts without exchange of certificates, and the like.

### [Hardware configuration]

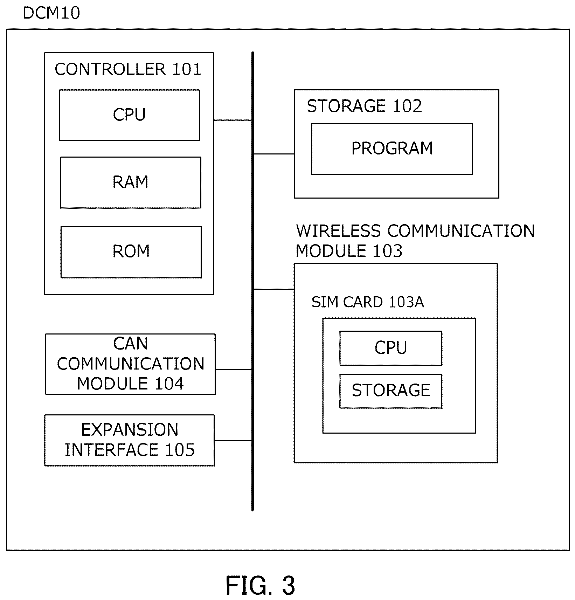

Next, a hardware configuration of each of the apparatuses constituting the system will be described. Fig. 3 is a diagram schematically illustrating an example of the configuration of hardware of the DCM 10 according to the present embodiment.

The DCM 10 can be configured as a computer including processors (a CPU, a GPU, and the like), main memories (a RAM, a ROM, and the like), and auxiliary storage devices (an EPROM, a hard disk drive, a removable medium, and the like). In an auxiliary storage device, an operating system (OS), various kinds of programs, various kinds of tables, and the like are stored, and each of functions (software modules) corresponding to predetermined purposes, as described later, can be realized by executing a program stored in the auxiliary storage device. A part or all of the functions may be realized as a hardware module by a hardware circuit such as an ASIC, an FPGA, or the like.

The DCM 10 includes a controller 101, a storage 102, a wireless communication module 103, a CAN communication module 104, and an expansion interface 105.

The controller 101 is an arithmetic unit that realizes various kinds of functions of the DCM 10 by executing a predetermined program. The controller 101 can be realized by a hardware processor, for example, a CPU. Further, the controller 101 may include a RAM, a ROM (read-only memory), a cache memory, and the like.

The storage 102 is means for storing information, and is configured with a storage medium such as a RAM, a magnetic disk, or a flash memory. In the storage 102, programs executed by the controller 101, and data and the like used by the programs are stored.

The wireless communication module 103 is a communication device that performs wireless communication with a predetermined network. In the present embodiment, the wireless communication module 103 is configured to be communicable with a predetermined cellular communication network (the carrier network A).

The wireless communication module 103 includes a SIM card 103A. The SIM card 103A is the first SIM in Fig. 1. The SIM card 103A is configured as a microcomputer equipped with a CPU and a storage device. The SIM card 103A includes information (PLMN information) for connecting to the carrier network A and authentication information for receiving authentication from the communication system 2.

The CAN communication module 104 is a communication interface for connecting the DCM 10 to the in-car network of the vehicle 1. The CAN communication module 104 may be configured to include a network interface board for performing communication according to the CAN (Controller Area Network) protocol. The DCM 10 can perform data communication with the other components (for example, the in-vehicle terminal) of the vehicle 1 via the CAN communication module 104.

The expansion interface 105 is an interface for mutually connecting the DCM 10 and the communication apparatus 11. The expansion interface 105 is, for example, a USB interface. The DCM 10 is configured to be connectable to the communication apparatus 11, for example, via the USB interface.

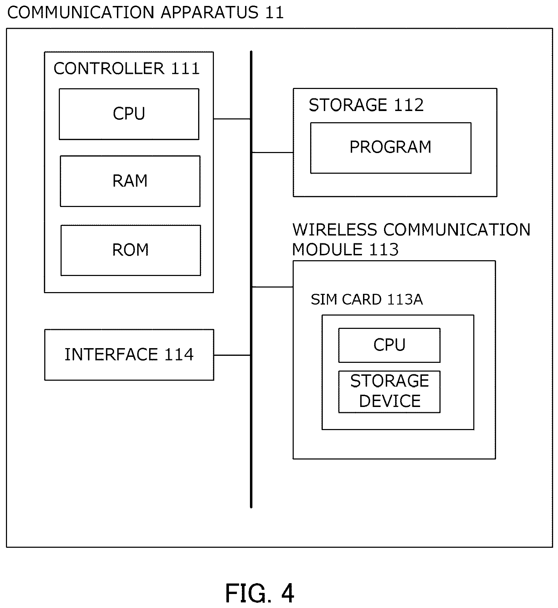

Next, the hardware configuration of the communication apparatus 11 will be described. Fig. 4 is a diagram schematically illustrating an example of the configuration of hardware of the communication apparatus 11 according to the present embodiment.

The communication apparatus 11 includes a controller 111, a storage 112, a wireless communication module 113, and an interface 114.

Similarly to the controller 101, the controller 111 is an arithmetic unit that realizes various kinds of functions of the communication apparatus 11 by executing a predetermined program. The controller 111 can be realized by a hardware processor, for example, a CPU.

The storage 112 is means for storing information, and is configured with a storage medium such as a RAM, a magnetic disk, or a flash memory. In the storage 112, programs executed by the controller 111, and data and the like used by the programs are stored.

The wireless communication module 113 is a communication device that performs wireless communication with a predetermined network. In the present embodiment, the wireless communication module 113 is configured to be communicable with a predetermined cellular communication network (the carrier network B).

The wireless communication module 113 includes a SIM card 113A. The SIM card 113A is the second SIM in Fig. 2. The SIM card 113A is configured as a microcomputer equipped with a CPU and a storage device. The SIM card 113A includes information (PLMN information) for connecting to the carrier network B and authentication information for receiving authentication from the network. The second SIM may be a physical SIM card or may be eSIM.

The interface 114 is an interface for mutually connecting the DCM 10 and the communication apparatus 11. The communication apparatus 11 is configured to be connectable to the DCM 10, for example, via an interface such as a USB interface.

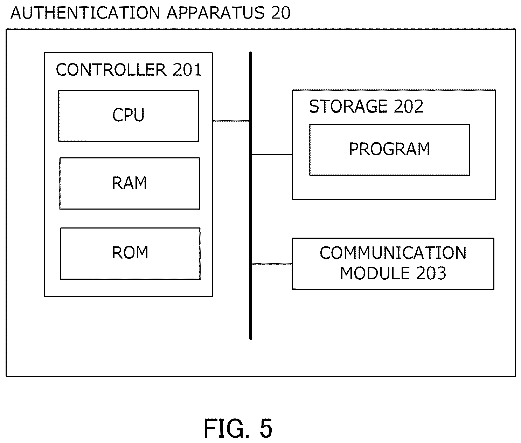

Next, the hardware configuration of the authentication apparatus 20 will be described. Fig. 5 is a diagram schematically illustrating an example of the configuration of hardware of the authentication apparatus 20 according to the present embodiment.

The authentication apparatus 20 is configured as a computer that includes a controller 201, a storage 202, and a communication module 203.

The authentication apparatus 20 can be configured as a computer including processors (a CPU, a GPU, and the like), main memories (a RAM, a ROM, and the like), and auxiliary storage devices (an EPROM, a hard disk drive, a removable medium, and the like). A part or all of the functions (software modules) may be realized as a hardware module by a hardware circuit such as an ASIC, an FPGA, or the like.

The controller 201 is an arithmetic unit that realizes various kinds of functions (software modules) of the authentication apparatus 20 by executing a predetermined program. The controller 201 can be realized by a hardware processor, for example, a CPU.

The storage 202 is means for storing information, and is configured with a storage medium such as a RAM, a magnetic disk, or a flash memory. In the storage 202, programs executed by the controller 201, and data and the like used by the programs are stored.

The communication module 203 is a communication interface for connecting the authentication apparatus 20 to the communication system 2. The authentication apparatus 20 is capable of performing data communication with other apparatuses arranged in the communication system 2 via the communication module 203.

### [Software configuration]

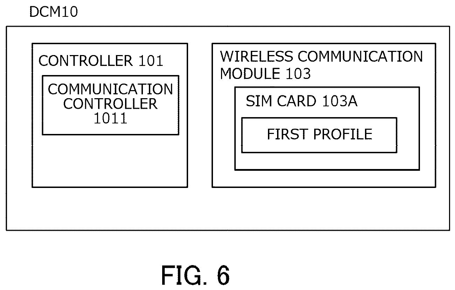

Next, a software configuration of each of the apparatuses constituting the system will be described. Fig. 6 is a diagram schematically illustrating the software configuration of the DCM 10 according to the present embodiment.

In the present embodiment, the controller 101 of the DCM 10 includes a software module of a communication controller 1011. The software module may be realized by executing a program stored in the storage 102 by the controller 101 (the CPU). Information processing executed by the software module is the same as the information processing executed by the controller 101 (the CPU).

Further, the SIM card 103A (the first SIM) included in the wireless communication module 103 is configured to store the first profile, which is SIM profile information. The first profile is a profile issued by a business operator that manages the communication system 2. The first profile includes, for example, identification information such as an IMSI (international mobile subscription identity) and an ICCID (integrated circuit card ID), and authentication information (key information) for receiving SIM authentication including AKA authentication.

The communication controller 1011 establishes a network connection in response to a request from a vehicle component of the vehicle 1. The communication controller 1011 may be configured to be capable of selecting a network used for connection. For example, when the first SIM is inserted in the DCM 10, the DCM 10 can perform network connection via the carrier network A. Further, when the communication apparatus 11 including the second SIM is connected to the DCM 10, the DCM 10 can perform network connection via the carrier network B. When a plurality of networks are available, the communication controller 1011 may decide a network used for connection based on selection by the user.

In the case of performing network connection via the carrier network A, the communication controller 1011 receives authentication from the authentication apparatus 20 using the profile information (the first profile) stored in the first SIM.

In the case of performing network connection via the carrier network B, the communication controller 1011 executes a process for requesting the communication apparatus 11 to connect to the carrier network B first. Secondly, after the communication apparatus 11 connecting to the carrier network B, the communication controller 1011 interacts with the communication system 2 (the authentication apparatus 20) via the carrier network B and executes a process for receiving authentication from the authentication apparatus 20.

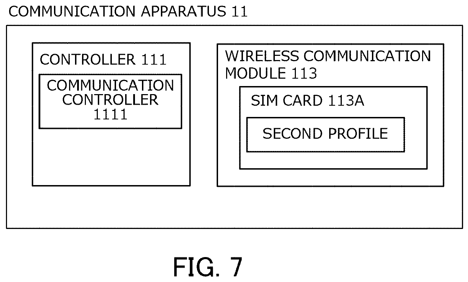

Next, the software configuration of the communication apparatus 11 will be described. Fig. 7 is a diagram schematically illustrating the software configuration of the communication apparatus 11 according to the present embodiment.

In the present embodiment, the controller 111 of the communication apparatus 11 includes a software module of a communication controller 1111. The software module may be realized by executing a program stored in the storage 112 by the controller 111 (the CPU). Information processing executed by the software module is the same as the information processing executed by the controller 111 (the CPU).

Further, the SIM card 113A (the second SIM) included in the wireless communication module 113 is configured to store a second profile, which is SIM profile information. The second profile is a profile issued by a carrier that manages the carrier network B. Similarly to the first profile, the second profile includes, for example, identification information such as an IMSI and an ICCID, and authentication information (key information) for receiving SIM authentication.

The communication controller 1111 establishes a network connection in response to a request from the DCM 10. When connection is requested by the DCM 10, the communication controller 1111 performs network connection via the carrier network B. At this time, the communication controller 1111 receives authentication from a control apparatus (an MME) of the carrier network B, using the profile information (the second profile) stored in the second SIM.

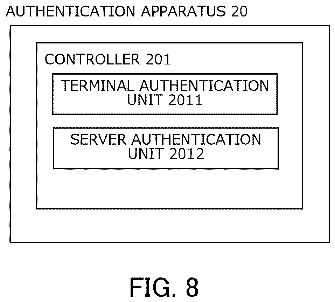

Next, the software configuration of the authentication apparatus 20 will be described. Fig. 8 is a diagram schematically illustrating the software configuration of the authentication apparatus 20 according to the present embodiment.

In the present embodiment, the controller 201 of the authentication apparatus 20 includes two software modules, a terminal authentication unit 2011 and a server authentication unit 2012. Each software module may be realized by executing a program stored in the storage 202 by the controller 201 (the CPU). Information processing executed by the software module is the same as the information processing executed by the controller 201 (the CPU).

In response to a request from the DCM 10, the terminal authentication unit 2011 executes a process for authenticating the DCM 10. The authentication process can be executed, for example, according to the following sequence stipulated by 3GPP (registered trademark):
(1) a process for receiving an attach request from the DCM 10;
(2) a process for transmitting a request (an authentication data request) to obtain authentication-related data to the HSS;
(3) a process for acquiring the authentication-related data (an authentication data response) from the HSS;
(4) a process for transmitting a challenge (a user authentication request) to the DCM 10;
(5) a process for receiving a response (a user authentication response) from the DCM 10; and
(6) a process for confirming the authenticity of the DCM 10 based on the response.

Further, the terminal authentication unit 2011 may execute processes required to register the DCM 10 with the communication system 2 in addition to the above.

The server authentication unit 2012 executes a process for authenticating the server apparatus 3 which is a communication counterpart of the DCM 10. For example, the server authentication unit 2012 acquires an electronic certificate issued by a certificate authority from the server apparatus 3 which is the communication counterpart of the DCM 10. The server authentication unit 2012 can verify whether the acquired electronic certificate corresponds to the server apparatus 3 or not, by decrypting the electronic certificate with a public key of the authentication authority. A process for the server authentication unit 2012 to authenticate the server apparatus 3 is not limited to such a process using an electronic certificate as exemplified above.

The authentication process is executed at any timing before the DCM 10 starts communication with the server apparatus 3.

The terminal authentication unit 2011 that has confirmed the authenticity of the DCM 10 by authentication and the server authentication unit 2012 that has confirmed the authenticity of the server apparatus 3 share the authentication results with each other. That is, the terminal authentication unit 2011 transmits the result of authentication of the DCM 10 to the server apparatus 3, and the server authentication unit 2012 transmits the result of authentication of the server apparatus 3 to the DCM 10. Thereby, the DCM 10 and the server apparatus 3 can confirm that their communication counter parts are authenticated. The authentication results can be treated as valid until the DCM 10 is disconnected from the communication system 2.

### [Flowchart]

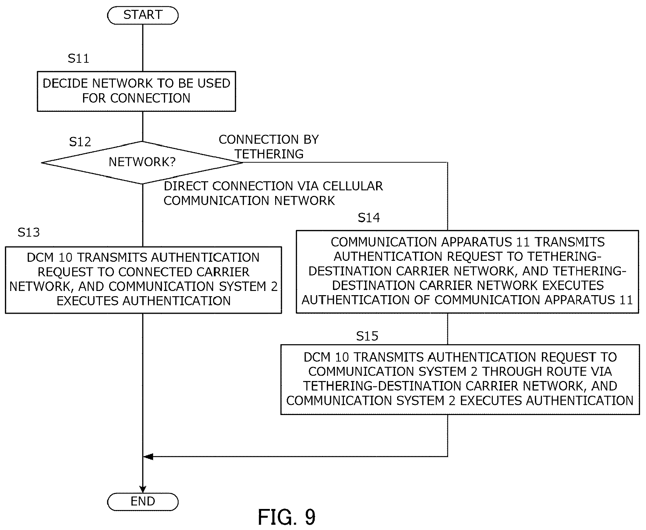

Next, details of the process executed at the time of the DCM 10 connecting to the communication system 2 will be described. Fig. 9 is a flowchart of the process executed at the time of the DCM 10 connecting to the communication system 2.

First, at step S11, the communication controller 1011 of the DCM 10 decides a network to be used for connection. For example, when a valid first SIM is inserted in the DCM 10, the communication controller 1011 can decide to perform connection using the carrier network A illustrated in Fig. 1. When a valid first SIM is not inserted in the DCM 10 or when the communication apparatus 11 is connected to the DCM 10, the communication controller 1011 may decide to perform network connection via the communication apparatus 11 (the carrier network B).

When a plurality of networks are available, which of the networks is to be used may be decided based on a selection made by the user.

Next, at step S12, the communication controller 1011 determines whether the network to be used for connection is for direct connection via the cellular communication network or for connection by tethering. The direct connection via the cellular communication network is a form in which the DCM 10 connects to the communication system 2 via the carrier network A, using the built-in wireless communication module 103. The connection by tethering is a form in which the communication apparatus 11 connected to the DCM 10 connects to the carrier network B, and the DCM 10 connects to the communication system 2 via the IP communication network, through the communication apparatus 11.

If the network to be used for connection is the direct connection via the cellular communication network, the process transitions to step S13. If the network to be used for connection is the connection by tethering, the process transitions to step S14.

At step S13, the communication controller 1011 transmits an authentication request to the carrier network A, and the communication system 2 authenticates the DCM 10.

At the present step, the communication controller 1011 transmits the authentication request to the carrier network A, for example, via the base station of the carrier network A. The authentication request may be data for starting an authentication procedure (for example, an attach request stipulated by 3GPP) or may be data that includes substantial data required for authentication. The authentication request reaches the communication system 2 via the carrier network A. For example, the MME of the carrier network A that receives the authentication request may transfer the authentication request to the authentication apparatus 20 of the communication system 2.

Next, the authentication apparatus 20 of the communication system 2 starts authentication of the DCM 10 according to the authentication request. For example, the authentication apparatus 20 request data to be used for authentication (hereinafter, authentication-related data) from the HSS of the communication system 2. The authentication apparatus 20 authenticates the DCM 10 using the received authentication-related data and the information recorded in the first SIM included in the DCM 10 (details will be described later).

If the authentication apparatus 20 succeeds in the authentication of the DCM 10, establishment of a communication line in a control plane and a user plane is executed by the communication system 2. Thereby, the DCM 10 is into a state of being communicable with the server apparatus 3 via the P-GW of the communication system 2.

If the process transitions to step S14, the DCM 10 instructs the communication apparatus 11 to perform network connection. In response thereto, the communication apparatus 11 starts connection using the carrier network B. Specifically, the controller 111 of the communication apparatus 11 transmits an authentication request to the carrier network B via the base station of the carrier network B. The authentication request is received by the MME of the carrier network B, and the MME authenticates the communication apparatus 11 based on the authentication-related data acquired from the HSS. For the authentication, the profile information stored in the second SIM is used.

When the authentication is completed, a communication line is established between the communication apparatus 11 and the carrier network B, and, thereby, the communication apparatus 11 becomes communicable with the IP communication network via the P-GW.

When the communication apparatus 11 becomes communicable with the IP communication network, authentication is started between the DCM 10 and the communication system 2 at step S15. At step S15, the DCM 10 transmits an authentication request to the communication system 2 through a route via a tethering-destination carrier network (that is, the carrier network B). The authentication request reaches the communication system 2 via the IP communication network and the ePDG and is received by the authentication apparatus 20.

Next, the authentication apparatus 20 starts authentication of the DCM 10 according to the received authentication request. A procedure for the authentication is similar to that described in the description of step S13. That is, at this step also, authentication of the DCM 10 is executed based on the profile information stored in the first SIM.

If the authentication apparatus 20 succeeds in the authentication of the DCM 10, establishment of a communication line is executed by the communication system 2. Thereby, the DCM 10 connected to the communication system 2 via the ePDG is into a state of being communicable with the server apparatus 3 via the P-GW. The establishment of a communication line and relay of data using the communication line may be executed by the authentication apparatus 20 or may be executed by another apparatus included in the communication system 2.

The communication system 2 does not relay communication between apparatuses between which a communication line has not been established. Thereby, for example, communication with the DCM 10 performed by a server apparatus that has not been authenticated is blocked by the communication system 2.

Next, an authentication-related process executed by the authentication apparatus 20 will be described.

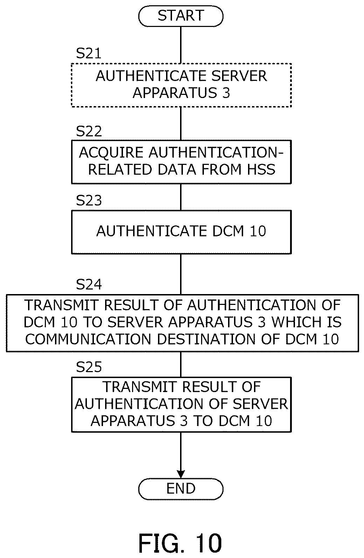

Fig. 10 is a flowchart of a process executed by the authentication apparatus 20 at step S13 and S15. The illustrated process is started at a timing when the authentication apparatus 20 (the terminal authentication unit 2011) receives an authentication request transmitted from the DCM 10.

As described before, in the present embodiment, the authentication apparatus 20 provides information about a result of authentication of the DCM 10 for the server apparatus 3 which is a communication counterpart of the DCM 10. Similarly, the authentication apparatus 20 authenticates the server apparatus 3 in advance and provides a result of the authentication for the DCM 10. Thereby, the DCM 10 and the server apparatus 3 can mutually confirm authenticity without directly performing mutual authentication.

Therefore, it is necessary for the communication system 2 to authenticate the server apparatus 3 at a timing before the DCM 10 is connected. Step S21 is a step for the authentication apparatus 20 to authenticate the server apparatus 3 on the Internet (the PDN). At this step, for example, the authentication apparatus 20 (the server authentication unit 2012) acquires an electronic certificate from the server apparatus 3 and decrypts the electronic certificate with a public key of the certificate authority. Thereby, it is possible to verify whether the acquired electronic certificate corresponds to the server apparatus 3 or not. The present step may be skipped after authentication of the server apparatus 3 is completed.

Next, at step S22, the terminal authentication unit 2011 acquires authentication-related data from the HSS. The authentication-related data is data used to authenticate the DCM 10. As the authentication-related data, for example, a challenge, authentication token, expected response value, or the like issued by the HSS (in the case of performing AKA authentication between the authentication apparatus 20 and the DCM 10) can be exemplified. The AKA authentication is an authentication method using a challenge response, which is for performing authentication of a terminal using a SIM card. The authentication-related data may be subscriber information.

At step S23, the terminal authentication unit 2011 authenticates the DCM 10 based on the authentication-related data. In the case of performing AKA authentication, the authentication apparatus 20 transmits a challenge to the DCM 10, and the DCM 10 generates a response in response thereto. The response is generated based on the authentication information (the key information) included in the profile information stored in the first SIM. If the generated response corresponds to the authentication-related data provided by the HSS, the authentication of the DCM 10 can be regarded as being successful.

Though AKA authentication has been exemplified as a method for authenticating the DCM 10, authentication may be executed by any other method if the method is a method of performing authentication based on information stored in a SIM card.

Next, at step S24, the terminal authentication unit 2011 transmits a result of authenticating the DCM 10 to the server apparatus 3. For example, the terminal authentication unit 2011 generates data in which an IP address or MAC address assigned to the DCM 10 and the authentication result are associated and transmits the data to the server apparatus 3. Thereby, the server apparatus 3 can confirm that the connected DCM 10 is authenticated. Especially, the DCM 10 which is connected to the communication system 2 and for which authentication has been completed can be regarded as being authenticated unless it is disconnected from the communication system 2.

Next, at step S25, the server authentication unit 2012 transmits a result of authenticating the server apparatus 3 to the DCM 10. For example, the server authentication unit 2012 generates data in which an IP address or MAC address assigned to the server apparatus 3 and the authentication result are associated and transmits the data to the DCM 10. Thereby, the DCM 10 can confirm that the server apparatus 3, which is a connection destination, is authenticated.

Though the DCM 10 performs communication via the IP communication network for which security is not ensured, it is possible to regard a counterpart-side apparatus (the server apparatus 3) as a trustable counterpart as far as the DCM 10 performs communication via the ePDG of the communication system 2.

As described above, the DCM 10 according to the first embodiment is configured such that the communication apparatus 11 can be connected thereto, and can perform communication with the communication system 2 via any cellular communication network through the communication apparatus 11. Thereby, even if it becomes impossible to use the wireless communication module included in the DCM 10, it is possible to secure an alternative communication route and continue communication.

Furthermore, the authentication apparatus 20 according to the first embodiment performs authentication of the DCM 10 and the server apparatus 3 in the communication system 2 using the profile information stored in the first SIM, irrespective of a route of access from the DCM 10, and shares results of the authentications with the server apparatus 3 and the DCM 10, respectively. Thereby, it becomes unnecessary to exchange certificates and the like between the DCM 10 and the server apparatus 3 each time, and resources for authentication can be saved.

Furthermore, since the authentication information used for authentication by the DCM 10 relates to a SIM contract, it can be considered that identity verification has been performed, by the authentication apparatus 20 having authenticated the DCM 10. Therefore, the server apparatus 3 can recognize that the user of the vehicle 1 is a contractor himself without performing an additional identity verification process.

### (Modification of first embodiment)

In the first embodiment, a communication route (a communication route by tethering) other than the carrier network A is added by connecting the communication apparatus 11 to the DCM 10.

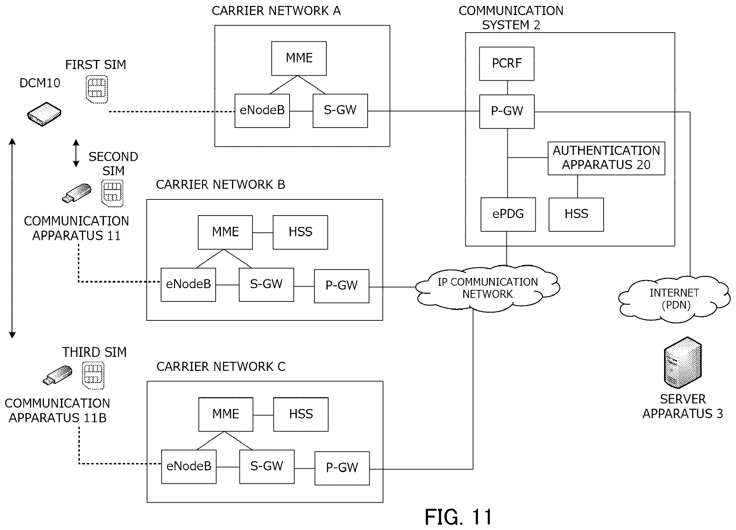

A plurality of communication routes by tethering may be settable. Fig. 11 is a schematic diagram illustrating a form in which another communication apparatus (a communication apparatus 11B) is further connectable to the DCM 10 of the first embodiment.

As illustrated in Fig. 11, the DCM 10 is configured to be connectable to the other communication apparatus 11B in addition to the communication apparatus 11. The communication apparatus 11B includes a SIM card (a third SIM) for connecting to a carrier network C. The communication apparatus 11 and the communication apparatus 11B may be connectable at the same time.

In the present modification, the DCM 10 can select an apparatus to be used for communication from among the DCM 10 itself, the communication apparatus 11, and the communication apparatus 11B. When the DCM 10 itself is selected as the apparatus to be used for communication, the communication is performed via the carrier network A. When the communication apparatus 11 is selected as the apparatus to be used for communication, the communication is performed via the carrier network B. Further, when the communication apparatus 11B is selected as the apparatus to be used for communication, the communication is performed via the carrier network C.

When there are a plurality of communication routes by tethering, the communication controller 1011 may decide which of the communication routes is to be used, before executing step S14.

No matter which communication route is used, the DCM 10 receives authentication from the authentication apparatus 20 using the profile information stored in the first SIM. According to such a configuration, it is possible to freely add a communication route without changing the configuration of performing authentication using the first SIM.

Furthermore, though an example of securing an alternative route by USB tethering is shown in the first embodiment, an alternative route may be a route by Wi-Fi tethering. In this case, the DCM 10 may be configured to be wirelessly connectable to a smartphone or the like owned by the user of the vehicle 1. In this case, the exemplified communication apparatus 11 (or communication apparatus 11B) is replaced with the smartphone or the like.

### (Modifications)

The above embodiment is merely an example, and the present disclosure can be appropriately changed and practiced within a range not departing from the spirit thereof.

For example, the processes and means described in the present disclosure can be freely combined and implemented as far as technical contradiction does not occur.

Further, though 4G (LTE-Advanced) is exemplified as the standard of the cellular communication network in the description of the embodiment, 3G, 5G or the like can be also adopted as the communication standard. In this case, the ePDG can be replaced with an N3IWF (non-3GPP Interworking Function) (in the case of 5G), a PDG (in the case of 3G), or the like.

Further, though the DCM 10 is exemplified as a mobile communication terminal in the description of the embodiment, the mobile communication terminal may be an IoT terminal.

Further, though the DCM 10 is assumed to be connectable to the carrier network A in the description of the embodiment, the DCM 10 does not necessarily have to include the wireless communication module 103, and may not have a function of connecting to the carrier network A. That is, the DCM 10 may be configured such that it is necessary to perform communication via the communication apparatus 11. Even in this case, the DCM 10 receives authentication from the authentication apparatus 20 using the profile information stored in the first SIM. In such a configuration, the first SIM is not used to connect to a carrier network but used only for authentication.

Further, though an example of authenticating the DCM 10 using profile information stored in a SIM is given in the description of the embodiment, the DCM 10 may be authenticated by any other method. For example, the DCM 10 may hold a pair of key information and an electronic certificate (for example, issued by the certificate authority) for proving the authenticity of the key information in the storage 102. It is also possible for the authentication apparatus 20 to authenticate the DCM 10 using such information. In any case, authentication is executed using the same authentication information irrespective of a communication route.

Further, a process described as being performed by one apparatus may be shared and executed by a plurality of apparatuses. Or alternatively, processes described as being performed by different apparatuses may be executed by one apparatus. In a computer system, in what hardware configuration (server configuration) each function is realized can be flexibly changed.

The present disclosure can be realized by supplying a computer program implemented with the functions described in the above embodiment to a computer, and one or more processors of the computer reading out and executing the program. Such a computer program may be provided for the computer by a non-transitory computer-readable storage medium connectable to the system bus of the computer or may be provided for the computer via a network. As the non-transitory computer-readable storage medium, for example, any type of disk such as a magnetic disk (a floppy (registered trademark) disk, a hard disk drive (HDD), or the like) and an optical disc (a CD-ROM, a DVD disc, a Blu-ray disc, or the like), a read-only memory (ROM), a random-access memory (R_AM), an EPROM, an EEPROM, a magnetic card, a flash memory, an optical card, and any type of medium that is appropriate for storing electronic commands are included.

## Claims

1. A communication system comprising a mobile communication terminal (10) and a first network (2),
wherein
the mobile communication terminal (10) comprises:
a first storage (103A) configured to store first authentication information; and
a first controller (101) configured to execute:
selecting a communication network to be used for communication with the first network (2) from among a plurality of communication networks including an untrusted network that is not trusted; and
receiving authentication from the first network (2) connected via the selected communication network, using the first authentication information; and
the first network (2) comprises:
a second storage (HSS) configured to store second authentication information corresponding to the first authentication information;
a gateway (ePDG) configured to accommodate access from the untrusted network; and
a second controller (201) configured to authenticate the mobile communication terminal (10) connected via the gateway, based on the second authentication information.

2. The communication system according to claim 1,
wherein
the first controller receives the authentication from the first network using the same first authentication information no matter which of the plurality of communication networks the first controller selects.

3. The communication system according to claim 2,
wherein
the second controller performs the authentication using the same second authentication information no matter which of the plurality of communication networks the mobile communication terminal selects.

4. The communication system according to claim 1,
wherein
the mobile communication terminal is configured such that a communication module configured to perform communication via any of communication networks including an untrusted network can be added.

5. The communication system according to claim 1,
wherein
the mobile communication terminal includes an eUICC (embedded universal integrated circuit card); and
the first authentication information is SIM profile information that the eUICC includes.

6. The communication system according to claim 5,
wherein
the SIM profile information is issued by a business operator that operates the first network.

7. The communication system according to claim 1,
wherein
the mobile communication terminal is an IoT device.

8. An authentication method, wherein
a mobile communication terminal (10) executes:
a first step of selecting a communication network to be used for communication with a first network (2) from among a plurality of communication networks including an untrusted network that is not trusted; and
a second step of receiving authentication from the first network (2) connected via the selected communication network, using first authentication information stored in advance; and
a controller (201) included in the first network (2) executes a third step of authenticating the mobile communication terminal (10) connected via a gateway **(ePDG)** configured to accommodate access from the untrusted first communication network, using second authentication information corresponding to the first authentication information stored in advance.

9. The authentication method according to claim 8,
wherein
at the second step, the authentication is received using the same first authentication information no matter which of the plurality of communication networks is selected.

10. The authentication method according to claim 9,
wherein
at the third step, the authentication is performed using the same second authentication information no matter which of the plurality of communication networks the mobile communication terminal selects.

11. The authentication method according to claim 8,
wherein
the mobile communication terminal includes an eUICC (embedded universal integrated circuit card); and
the first authentication information is SIM profile information that the eUICC includes.

12. The authentication method according to claim 11,
wherein
the SIM profile information is issued by a business operator that operates the first network.

13. The authentication method according to claim 8,
wherein
the mobile communication terminal is an IoT device.
